# FASCICULE DE BREVET EUROPEEN

(11) **EP 3 546 350 B1**
(45) Date de publication et mention de la délivrance du brevet: **27.01.2021**
(21) Numéro de dépôt: 19165312.0
(22) Date de dépôt: 26.03.2019
(51) Int. Cl.: B64C 25/40, B64C 25/42, B64C 25/34, B64C 25/32

(54) **ATTERRISSEUR D'AERONEF A BOGIE PORTANT DES ROUES FREINEES ET AU MOINS UNE ROUE MOTORISEE**
FAHRWERK EINES LUFTFAHRZEUGS MIT FAHRGESTELL, DAS GEBREMSTE RÄDER UND MINDESTENS EIN MOTORISIERTES RAD UMFASST
AIRCRAFT LANDING GEAR WITH BOGIE AND WITH BRAKED WHEELS AND AT LEAST ONE MOTORISED WHEEL

(30) Priorité: 29.03.2018 FR 1852756
(43) Date de publication de la demande: 02.10.2019
(73) Titulaire: Safran Landing Systems, 78140 Vélizy-Villacoublay (FR)
(72) Inventeur: GUI, Jérôme, 77550 Moissy-Cramayel (FR); RAVEL, Jean-Yves, 77550 Moissy-Cramayel (FR); DEVILLERS, Christophe, 77550 Moissy-Cramayel (FR)
(74) Mandataire: Lavialle, Bruno François Stéphane

(56) Documents cités:
- EP-A1- 2 383 182
- WO-A2-2009/125213
- FR-A1- 2 869 014
- US-A1- 2013 112 805

## Description

L'invention concerne un atterrisseur d'aéronef à bogie portant des roues freinées et au moins une roue motorisée

### ARRIERE PLAN DE L'INVENTION

On connaît du document WO 2009/125213 des aéronefs comportant des atterrisseurs donc certaines des roues sont équipées d'un dispositif de d'entraînement en rotation (ou roues motorisées) pour permettre le déplacement de l'aéronef au sol sans utilisation des groupes motopropulseurs. Différentes dispositions de ces roues motorisées ont été proposées.

Pour des aéronefs de taille importante comportant au moins trois atterrisseurs principaux comme l'A340-600 ou l'A380, on a proposé dans le document EP 2 383 182 de faire porter les roues motorisées par un premier groupe d'atterrisseurs et les roues freinées par un deuxième groupe d'atterrisseurs. Un dispositif de répartition de charge statique entre les atterrisseurs permet de charger les roues freinées lors d'une phase de freinage, et les roues motorisées lors d'une phase de déplacement.

Sur des aéronefs ne comportant que deux atterrisseurs principaux, il n'est pas possible de spécialiser les atterrisseurs principaux en ne leur faisant porter que des roues freinées ou que des roues motorisées. Les roues motorisés peuvent dès lors être portées par l'atterrisseur auxiliaire à l'avant de l'aéronef. Cependant une telle disposition nécessite qu'une charge statique minimale soit reprise par ledit atterrisseur auxiliaire, ce qui implique un centrage avant de l'aéronef. Si une telle disposition s'avère inenvisageable, il faut alors se résoudre à faire porter les roues motorisées par les atterrisseurs principaux. Pour des aéronefs dont les atterrisseurs principaux ne comportent que deux roues (A320,B737), chacune des roues doit dès lors être équipée à la fois d'un dispositif de freinage et d'un dispositif de d'entraînement, ce qui s'avère complexe et en pratique difficile à concevoir compte tenu des contraintes d'encombrement drastiques.

L'invention s'intéresse plus particulièrement aux aéronefs de taille intermédiaire pourvus d'atterrisseurs principaux équipés d'un bogie et portant au moins deux essieux, comme l'A350 ou le B777. Il est connu du document US 2013/112805 que l'on peut y adapter des roues portant à la fois un dispositif de freinage et un dispositif d'entraînement. Cependant, une telle adaptation conduit comme déjà mentionné à des roues complexes.

### OBJET DE L'INVENTION

L'invention vise à proposer un atterrisseur à bogie dont les roues assurent le freinage et le déplacement autonome de l'aéronef.

### PRESENTATION DE L'INVENTION

En vue de la réalisation de ce but, on propose un atterrisseur à bogie comportant au moins deux essieux chacun porteur d'au moins deux roues, dans lequel l'un au moins des essieux porte une roue équipée d'un dispositif d'entraînement à l'exclusion de tout dispositif de freinage, et une roue munie d'un dispositif de freinage à l'exclusion de tout dispositif de déplacement, les autres roues étant équipées d'un dispositif de freinage à l'exclusion de tout dispositif de déplacement.

Bien entendu, les roues sont placées sur les atterrisseurs de sorte que la configuration des roues freinées et des roues motorisées soient symétriques par rapport à un plan de symétrie vertical de l'aéronef.

Compte tenu du nombre de roues par atterrisseur (au moins quatre), il est possible de spécialiser des roues pour le déplacement de l'aéronef sans obérer excessivement la capacité de freinage de l'aéronef.

Ainsi, et selon une disposition préférée pour un atterrisseur à bogie à quatre roues, on propose selon l'invention de disposer sur cet atterrisseur une roue équipée d'un dispositif d'entraînement, les trois autres roues étant des roues freinées. Deux roues de l'aéronef sont donc spécialisées pour son déplacement au sol, tandis que les six autres roues des atterrisseurs principaux sont dédiées au freinage de l'aéronef. Bien entendu, la disposition des freins est dissymétrique sur chaque atterrisseur, de sorte que l'application d'une même consigne de freinage aux trois freins d'un atterrisseur conduira à la génération d'un couple de torsion sur la jambe de l'atterrisseur. Selon un aspect particulier de l'invention, on commande les freins de sorte à minimiser voire annuler cette dissymétrie, au moins pour des freinages usuels en dessous d'un seuil de freinage donné. Ce type de commande ne peut être mis en œuvre que si le freinage demandé reste en dessous d'un seuil donné. Au-delà, on admettra que le freinage soit dissymétrique, pour privilégier les performances de freinage. De préférence, en réponse à une consigne de freinage, on freine d'abord avec les roues freinées portées par le ou les essieux ne portant que des roues freinées, puis, lorsqu'un niveau maximal de freinage par ces roues est atteint, on freine avec la roue freinée portée par l'essieu qui porte également la roue motorisée.

### DESCRIPTION DES FIGURES

L'invention sera mieux comprise à la lumière de la description qui suit d'un mode particulier de réalisation de l'invention, en référence aux figures des dessins annexés, parmi lesquelles :
- La figure 1 est une vue schématique du train d'atterrissage d'un aéronef à deux atterrisseurs principaux à bogie à quatre roues, équipés de roues motorisées et de roues freinées selon l'invention ;
- La figure 2 est une vue schématique d'un atterrisseur principal à bogie à six roues, équipés de roues freinées et d'une roue motorisée selon l'invention ;
- Les figures 3 et 4 sont des graphes montrant d'une part la génération d'une consigne de commande de freinage pour la roue freinée portée par l'essieu portant la roue motorisée, et d'autre part la génération d'une consigne de commande de freinage pour les autres roues freinées de l'atterrisseur.

### DESCRIPTION DETAILLEE DE L'INVENTION

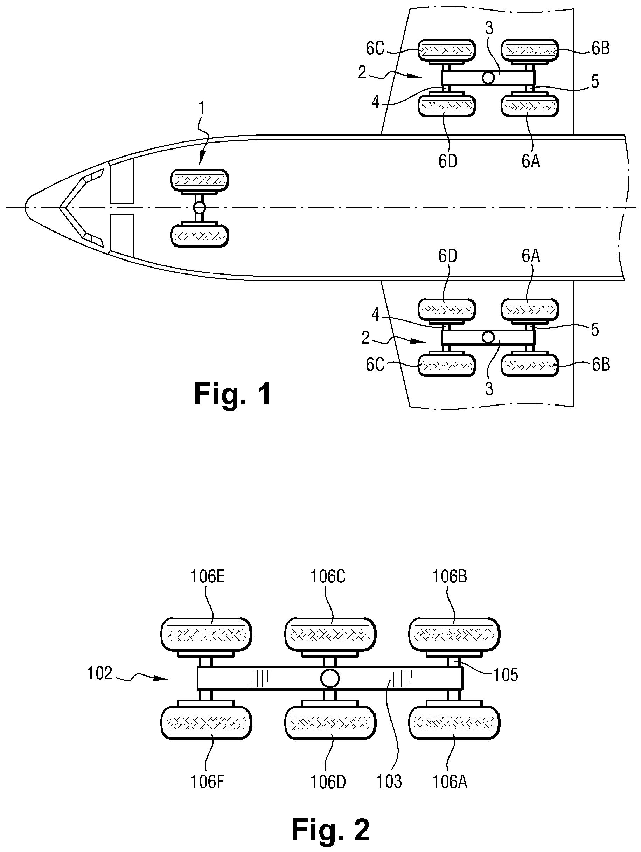

Selon un premier mode particulier de réalisation de l'invention illustré à la figure 1, l'invention s'applique à un aéronef muni d'un atterrisseur auxiliaire 1 et d'atterrisseurs principaux 2 à bogie comportant chacun un balancier 3 portant deux essieux dont un essieu avant 4 et un essieu arrière 5. Ici, et selon une disposition de l'invention, l'essieu arrière 5 porte une roue 6A équipée d'un dispositif d'entraînement en rotation (ou roue motorisée), et une roue 6B équipée d'un dispositif de freinage (ou roue freinée), tandis que l'essieu avant 4 est équipé de deux roues 6C,6D équipées d'un dispositif de freinage. Ici, la roue motorisée 6A est disposée du côté intérieur. Bien entendu, la disposition des roues sur chacun des atterrisseurs est symétrique par rapport à un plan de symétrie vertical de l'aéronef. Cette disposition permet d'utiliser des roues spécialisées, donc bien plus simples que des roues mixtes, tout en préservant une capacité de freinage appréciable.

Bien entendu, seules 6 roues sur 8 sont freinées, ce qui diminue la capacité de décélération de l'aéronef de 25% par rapport à un aéronef équipé uniquement de roues freinées. Cette perte n'est toutefois pas pénalisante car les performances de freinage demandées sont encore largement réalisables avec seulement six roues freinées. En outre, il est toujours possible d'utiliser le dispositif de déplacement de la roue motorisée pour générer du freinage, en complément du freinage généré par les roues freinées.

Cependant, pour tenir compte de certaines circonstances de freinage sévères nécessitant une capacité d'absorption d'énergie importante (notamment des cas de décollage refusé à pleine masse), il est toujours possible de procéder à un redimensionnement de la capacité d'absorption d'énergie des freins usuels (de sensiblement 33% dans le cas précité) pour retrouver la capacité de d'absorption d'énergie de freinage nominale d'un atterrisseur équipé de quatre roues freinées. En particulier, on pourra augmenter le volume des disques de freins (aussi appelé puits de chaleur) pour permettre une plus grande absorption d'énergie par frein. Ainsi, il est possible de proposer des atterrisseurs principaux à roues spécialisées sans pénalisation de la capacité d'absorption d'énergie de l'aéronef, au prix d'un redimensionnement des freins.

Selon un deuxième mode de réalisation de l'invention illustré à la figure 2, l'atterrisseur principal 102 est ici équipé d'un bogie à six roues, dont une roue motorisée 106A monté sur l'essieu arrière avec une roue freinée 106B, et quatre roues freinées 106C,106D,106E,106F portées par les deux autres essieux. Avec une roue motorisée par atterrisseur, la capacité de freinage serait diminuée de 16,7% si l'on utilise des freins usuels. Il est cependant possible de surdimensionner les freins (de 20%) pour retrouver la capacité de freinage nominale d'un atterrisseur équipé uniquement de roues freinées.

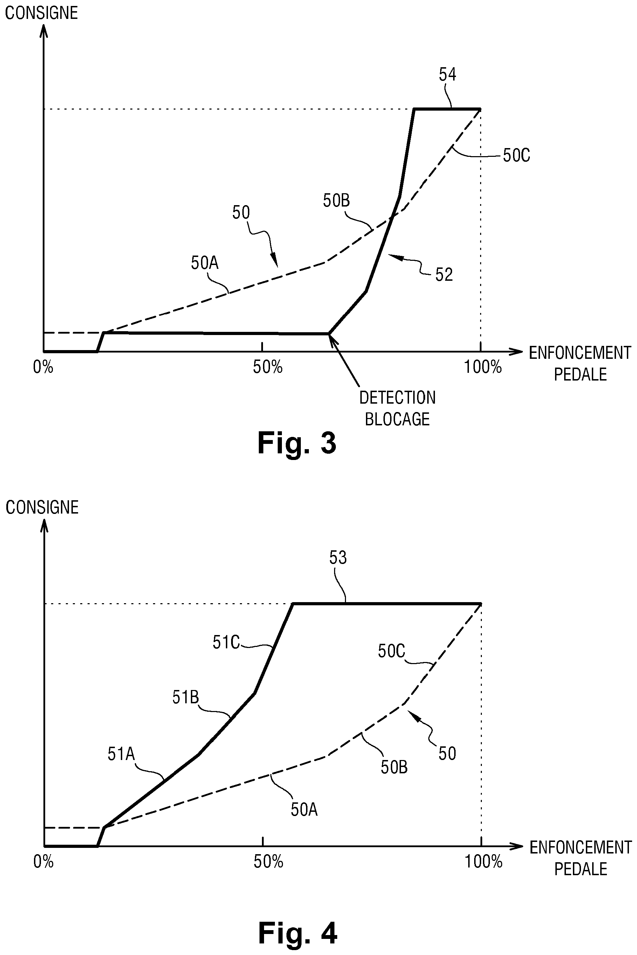

Dans les deux modes de réalisation illustrés, la disposition des freins est dissymétrique sur chaque atterrisseur, de sorte que l'application d'une même consigne de freinage à tous les freins d'un atterrisseur conduira à la génération d'un couple de torsion sur la jambe de l'atterrisseur. Selon un aspect particulier de l'invention, on commande les freins de sorte à minimiser voire annuler cette dissymétrie, au moins pour des freinages usuels en dessous d'un seuil de freinage donné. Pour ce faire, et selon un mode particulier de mise en œuvre de l'invention illustré aux figures 3 et 4, la consigne de freinage 50 générée par le pilote par appui sur les pédales de freins, ou par un calculateur de freinage, est interprétée différemment pour calculer deux consignes de commande de freinage 51 et 52 distinctes. Plus précisément, la figure 3 illustre la deuxième consigne de commande de freinage 52 destinée à la roue freinée 6B portée sur le même essieu que la roue motorisée 6A, et la figure 4 illustre la première consigne de commande de freinage 51 destinée aux roues freinées 6B portées par le ou les autres essieux.

Le principe est de n'appliquer un freinage que sur les roues freinées portées par le ou les essieux ne portant que des roues freinées, tant qu'un tel freinage s'avère suffisant. Un tel freinage est par nature symétrique. La roue freinée portée par l'essieu qui porte également la roue motorisée ne sera utilisée qu'en complément si le freinage demandé est trop important pour être réalisé par les autres roues freinées, ou pour prendre le relai d'une roue freinée qui viendrait à partir au blocage.

Après une première phase dans laquelle les consignes de commande de freinage 51,52 sont nulles tant que la contact entre l'actionneur de freinage et le puits de chaleur du frein n'a pas été détectée, la première consigne de commande de freinage 51 va augmenter avec la consigne de freinage 50 selon un profil qui suit celui de la consigne de freinage 50, affectée d'un premier coefficient multiplicateur, en l'occurrence un coefficient 1,5 pour un bogie à quatre roues, et un coefficient 2 pour un bogie à 6 roues. Sur l'exemple illustré, on distingue trois pentes successives 51a,51b,51c, correspondant aux trois pentes de la consigne de freinage 50. L'augmentation de la première consigne de commande de freinage 51 continue jusqu'à atteindre un seuil 53. Ce freinage est par nature symétrique, et se révèle en pratique souvent suffisant.

Si ce seuil 53 est atteint, c'est-à-dire lorsqu'un niveau maximal de freinage des roues freinées concernées est atteint, et qu'un freinage plus important est nécessaire, l'une des roues ainsi freinées grâce à la première consigne de commande de freinage 51 va partir au blocage. Ce blocage, qui résulte d'une perte d'adhérence de la roue compte tenu du couple de freinage qui lui est imprimé, va être détecté pour réaliser un freinage avec la roue freinée 6B,106B portée par l'essieu portant la roue motorisée 6A,106A en complément du freinage déjà en cours. A cet effet la deuxième consigne de commande de freinage 52 à destination de cette roue freinée 6B,106B va se mettre à augmenter à partir de cette détection selon un profil qui suit celui de la consigne de freinage 50 affecté d'un deuxième coefficient multiplicateur, ici égal à 4 pour un bogie à quatre roues, et 6 pour un bogie à six roues. L'augmentation de la deuxième consigne de commande de freinage 52, qui est donc plus raide que l'augmentation de la première de consigne de freinage 51, continue jusqu'à atteindre un seuil 54. L'application de ce freinage complémentaire rend le freinage global dissymétrique sur chacun des atterrisseurs, tout en restant néanmoins symétrique au niveau de l'aéronef. Cette dissymétrie est néanmoins transitoire.

L'invention n'est pas limitée à ce qui vient d'être décrit mais englobe au contraire toute variante entrant dans le cadre défini par les revendications.

En particulier, bien que la dissymétrie de freinage soit ici supprimée ou atténuée en générant des consignes de commande de freinage distinctes, tout autre moyen pourra être utilisé, comme par exemple des moyens de modification de la répartition de la charge sur les roues, de sorte à délester la roue motorisée, et donc la roue freinée qui est portée par le même essieu, et surcharger les autres roues freinées. Les moyens de modification de la répartition de charge pourront par exemple inclure des moyens de déplacement du pivot du bogie sur l'atterrisseur, de façon à le rapprocher de l'essieu portant uniquement des roues freinées, ou encore un actionneur installé entre l'atterrisseur et le bogie exerçant une poussée sur le bogie du côté de l'essieu portant uniquement des roues freinées.

## Revendications

1. Atterrisseur (2;102;202) à bogie comportant au moins deux essieux chacun porteur d'au moins deux roues, dans lequel l'un au moins des essieux porte une roue dite motorisée (6A;106A;206A) équipée d'un dispositif d'entraînement en rotation à l'exclusion de tout dispositif de freinage, et une roue dite freinée (6B;106B;206B) équipée d'un dispositif de freinage à l'exclusion de tout dispositif de déplacement, les autres roues (6B;106B;206B) étant des roues freinées.

2. Atterrisseur (2) à bogie selon la revendication 1, comportant quatre roues dont une roue (6A) équipée d'un dispositif d'entraînement en rotation et trois roues (6B) équipées d'un dispositif de freinage.

3. Atterrisseur (102) à bogie selon la revendication 1, comportant six roues dont une roue (106A) équipée d'un dispositif d'entraînement en rotation et cinq roues (106B) équipées d'un dispositif de freinage.

4. Procédé de freinage appliqué à un atterrisseur selon l'une des revendications précédentes, dans lequel, en réponse à une consigne de freinage, on freine d'abord avec les roues freinées (6C, 6D; 106C...106F) portées par le ou les essieux ne portant que des roues freinées, puis, lorsqu'un niveau maximal de freinage par ces roues est atteint, on freine avec la roue freinée (6A;106A) portée par l'essieu qui porte également la roue motorisée.

5. Procédé de freinage selon la revendication 4, dans laquelle, en réponse à une consigne de freinage, on génère une première consigne de commande de freinage (51) à destination des roues freinées (6C,6D;106C...106F) portées par le ou les essieux ne portant que des roues freinées, puis, lorsqu'un niveau maximal de freinage par ces roues est atteint, on génère une deuxième consigne de commande de freinage (52) à destination de la roue freinée (6A;106A) portée par l'essieu qui porte également la roue motorisée.

6. Procédé de freinage selon la revendication 5, dans lequel la première consigne de commande de freinage (51) est générée en appliquant un premier coefficient multiplicateur à la consigne de freinage (50), et la deuxième consigne de commande de freinage (52) est générée en appliquant un deuxième coefficient multiplicateur plus important que le premier coefficient multiplicateur à la consigne de freinage.

## Patentansprüche

1. Bogie-Fahrwerk (2; 102; 202), umfassend mindestens zwei Achsen, die jeweils mindestens zwei Räder tragen, bei dem mindestens eine der Achsen ein sogenanntes motorisiertes Rad (6A; 106A; 206A), das mit einer Drehantriebsvorrichtung und ohne eine Bremsvorrichtung ausgestattet ist, und ein sogenanntes gebremstes Rad (6B; 106B; 206B) trägt, das mit einer Bremsvorrichtung und ohne eine Bewegungsvorrichtung ausgestattet ist, wobei die anderen Räder (6B; 106B; 206B) gebremste Räder sind.

2. Bogie-Fahrwerk (2) nach Anspruch 1, umfassend vier Räder, darunter ein Rad (6A), das mit einer Drehantriebsvorrichtung ausgestattet ist, und drei Räder (6B), die mit einer Bremsvorrichtung ausgestattet sind.

3. Bogie-Fahrwerk (102) nach Anspruch 1, umfassend sechs Räder, darunter ein Rad (106A), das mit einer Drehantriebsvorrichtung ausgestattet ist, und fünf Räder (106B), die mit einer Bremsvorrichtung ausgestattet sind.

4. Bremsverfahren, das bei einem Fahrwerk nach einem der vorhergehenden Ansprüche angewandt wird, bei dem man in Antwort auf einen Bremssollwert zunächst mit den gebremsten Rädern (6C, 6D; 106C...106F) bremst, die von der oder den Achsen getragen werden, die nur gebremste Räder tragen, und man dann, wenn durch diese Räder ein maximales Bremsniveau erreicht ist, mit dem gebremsten Rad (6A; 106A) bremst, das von der Achse getragen wird, die auch das motorisierte Rad trägt.

5. Bremsverfahren nach Anspruch 4, bei dem man in Antwort auf einen Bremssollwert einen ersten Bremssteuersollwert (51) für die gebremsten Räder (6C, 6D; 106C...106F) erzeugt, die von der oder den Achsen getragen werden, die nur gebremste Räder tragen, und man dann, wenn durch diese Räder ein maximales Bremsniveau erreicht ist, einen zweiten Bremssteuersollwert (52) für das gebremste Rad (6A; 106A) erzeugt, das von der Achse getragen wird, die auch das motorisierte Rad trägt.

6. Bremsverfahren nach Anspruch 5, bei dem der erste Bremssteuersollwert (51) erzeugt wird, indem ein erster Multiplikationskoeffizient auf den Bremssollwert (50) angewandt wird, und der zweite Bremssteuersollwert (52) erzeugt wird, in dem ein zweiter Multiplikationskoeffizient, der größer als der erste Multiplikationskoeffizient ist, auf den Bremssollwert angewandt wird.

## Claims

1. A bogey undercarriage (2; 102; 202) having at least two axles, each carrying at least two wheels, wherein at least one of the axles carries a "motor-driven wheel" (6A; 106A; 206A) fitted with a rotary drive device and no brake device, and a "braked" wheel (6B; 106B; 206B) fitted with a brake device and no drive device, the other wheels (6B; 106B; 206B) being braked wheels.

2. A bogey undercarriage (2) according to claim 1, having four wheels, including one wheel (6A) having a rotary drive device and three other wheels (6B) each fitted with a brake device.

3. A bogey undercarriage (102) according to claim 1, having six wheels, including one wheel (106A) fitted with a rotary drive device, and five wheels (106B) each fitted with a brake device.

4. A braking method applied to an undercarriage according to any preceding claim, wherein, in response to a braking setpoint, braking begins with the braked wheels (6C, 6D; 106C, ..., 106F) carried by the axle(s) carrying braked wheels only, and then when a maximum level of braking by those wheels is reached, braking is applied using the braked wheel (6A; 106A) carried by the axle that also carries the motor-driven wheel.

5. A braking method according to claim 4, wherein, in response to a braking setpoint, a first braking control setpoint (51) is generated for the braked wheels (6C, 6D; 106C, ..., 106F) carried by the axle(s) that carry only braked wheels, and then, when these wheels reach a maximum level of braking, a second braking control setpoint (52) is generated for the braked wheels (6A; 106A) carried by the axle that also carries the motor-driven wheel.

6. A braking method according to claim 5, wherein the first braking control setpoint (51) is generated by multiplying the braking setpoint (50) by a first coefficient, and wherein the second braking control setpoint (52) is generated by multiplying the braking setpoint by a second coefficient greater than the first coefficient.
